# DEMANDE DE BREVET EUROPEEN

(11) **EP 1 445 136 A1**
(43) Date de publication de la demande: **11.08.2004**
(21) Numéro de dépôt: 04290179.3
(22) Date de dépôt: 23.01.2004
(51) Int. Cl.: B60J 5/04, B62D 65/00

(54) **Procédé d'assemblage d'un élément de carrosserie de véhicule automobile et élément de carrosserie**

(30) Priorité: 31.01.2003 FR 0301140
(71) Demandeur: Peugeot Citroen Automobiles, 78140 Velizy-Villacoublay (FR)
(72) Inventeur: Demougeot, Damien, 90000 Belfort (FR); Pierrel, Cédric, 25200 Montbeliard (FR)
(74) Mandataire: De Cuenca, Emmanuel Jaime

(57) **Abrégé**

L'invention concerne un procédé d'assemblage d'un élément de carrosserie de véhicule, telle qu'une porte (1), comportant une étape de fixation d'un élément (2,6) d'étanchéité sur un support (3) de l'élément (1) de carrosserie, une étape de mise en pression de l'élément (2,6) d'étanchéité contre le support (3) et une étape de fixation d'un moyen (4) d'habillage sur le support (3) de façon que l'élément (2,6) d'étanchéité assure l'étanchéité entre le moyen (4) d'habillage et le support (3), l'étape de mise en pression consistant à utiliser un moyen (5) formant entretoise disposé entre le moyen (4) d'habillage et le support (3), le moyen (5) formant entretoise étant disposé de façon à exercer une pression sur au moins une partie de l'élément (2,6) d'étanchéité.

## Description

L'invention se rapporte à un procédé d'assemblage d'un élément de carrosserie, ainsi qu'un élément de carrosserie.

L'invention concerne plus particulièrement un procédé d'assemblage d'un élément de carrosserie de véhicule, telle une porte.

L'invention concerne également une porte de véhicule automobile comportant un support, un élément d'étanchéité et un moyen d'habillage.

Il est connu de disposer un élément d'étanchéité sur une doublure de porte de véhicule automobile. Cette opération permet d'assurer l'étanchéité entre la doublure de la porte du véhicule et un élément de garniture intérieure monté sur la doublure de porte.

En effet, il est connu que les doublures de portes de véhicules automobiles comprennent au moins une ouverture permettant l'accès à des éléments fonctionnels pour réparabilité. Il est aussi connu de fermer cette ouverture par au moins un élément d'étanchéité. Traditionnellement, l'élément d'étanchéité comprend au moins une feuille d'étanchéité recouvrant l'intégralité de l'ouverture. La feuille d'étanchéité est alors solidaire de la doublure de porte par une opération de collage nécessitant l'utilisation d'un cordon d'étanchéité à fort pouvoir adhésif, disposé en périphérie de l'ouverture ménagée dans la doublure de porte.

L'opération de collage de la feuille d'étanchéité sur la doublure de porte, via le cordon d'étanchéité, nécessite une étape de mise en pression de la feuille d'étanchéité sur la doublure de porte. Cette opération intervient habituellement dans le processus d'assemblage de la porte, sur un poste dédié en ligne de montage des véhicules.

Ainsi, une fois l'opération de collage de la feuille d'étanchéité sur la doublure de porte réalisée, la feuille d'étanchéité est solidaire de la doublure de porte, de façon quasi permanente.

La demanderesse a constaté un problème lié à l'implantation du poste de mise en pression sur les lignes de montage. En effet, les lignes de montages actuelles de véhicules sont conçues de plus en plus de façon à assurer le montage des différentes variantes d'un même véhicule. Cette capacité fonctionnelle se traduit par une augmentation des ressources matérielles, ce qui tend déjà à augmenter la longueur d'une ligne de montage. L'étape de mise en pression d'une feuille d'étanchéité sur une doublure de porte exige un temps opératoire important, qui se traduit par une trop grande augmentation de la longueur de la ligne de montage.

Il a également été remarqué des cas de collage non parfait de l'élément d'étanchéité sur la porte. En effet, l'augmentation des cadences de production impose un temps pour l'opération de collage de plus en plus restreint, néfaste à un collage de qualité.

Un but de la présente invention est de proposer un procédé d'assemblage d'un élément de carrosserie de véhicule, telle une porte, comportant une étape de fixation d'un élément d'étanchéité sur un support de l'élément de carrosserie, une étape de mise sous pression de l'élément d'étanchéité contre le support et une étape de fixation d'un moyen d'habillage sur le support de façon que l'élément d'étanchéité assure l'étanchéité entre le moyen d'habillage et le support, palliant tout ou partie des inconvénients de l'art antérieur relevés ci-dessus

A cette fin, le procédé d'assemblage selon l'invention, par ailleurs conforme à la définition générique qu'en donne le préambule ci-dessus, est essentiellement caractérisé en ce que l'étape de mise en pression consiste à utiliser un moyen formant entretoise disposé entre le moyen d'habillage et le support, le moyen formant entretoise étant disposé de façon à exercer une pression sur au moins une partie de l'élément d'étanchéité.

Selon une autre particularité, le procédé d'assemblage comprend une étape visant à positionner et à fixer le moyen formant entretoise sur l'élément d'étanchéité, préalablement à l'étape de fixation de l'élément d'étanchéité sur le support.

Selon une autre particularité, le procédé d'assemblage comprend une étape de positionnement et de fixation du moyen formant entretoise sur le moyen d'habillage de porte préalablement à l'étape de fixation du moyen d'habillage sur le support.

Un autre but de la présente invention est de proposer un élément de carrosserie, tel une porte, comportant un support, un élément d'étanchéité et un moyen d'habillage fixé sur le support.

A cette fin, l'élément de carrosserie selon l'invention, par ailleurs conforme à la définition générique qu'en donne le préambule ci-dessus, est essentiellement caractérisé en ce qu'il comporte un moyen de mise en pression de l'élément d'étanchéité constitué d'au moins une entretoise disposée entre le moyen d'habillage et l'élément d'étanchéité de façon à assurer une compression totale ou partielle d'au moins une partie de l'élément d'étanchéité.

Par ailleurs, l'invention peut comporter l'une ou plusieurs des caractéristiques suivantes :
- l'élément d'étanchéité est constitué d'au moins une feuille d'étanchéité coopérant avec au moins un cordon d'étanchéité,
- le moyen d'habillage est constitué d'une garniture intérieure de porte,
- l'élément de carroserie comporte au moins un moyen de fixation du moyen d'habillage sur le support, du type agrafe ou vis de fixation, conformé de façon à contraindre l'entretoise sur l'élément d'étanchéité,
- le moyen formant entretoise comprend un élément déformable de type mousse possédant un taux de compression déterminé et/ou un cadre rigide conformé de façon à coopérer avec le moyen d'habillage et l'élément d'étanchéité, de façon à exercer une compression sur au moins une partie du cordon d'étanchéité,
- le moyen formant entretoise est solidaire soit du moyen d'habillage de porte, soit de l'élément d'étanchéité,
- le cordon d'étanchéité s'étend suivant une boucle fermée définie autour d'une ouverture du support.

D'autres particularités et avantages apparaîtront à la lecture de la description ci-après faite en référence aux figures dans lesquelles:
- la figure 1 est une vue en coupe transversale d'un élément de carrosserie, selon l'invention,
- la figure 2 est une vue en perspective d'une partie de l'élément de carrosserie représenté à la figure 1,
- la figure 3 est une vue en perspective d'un moyen d'habillage visible en figure 1.

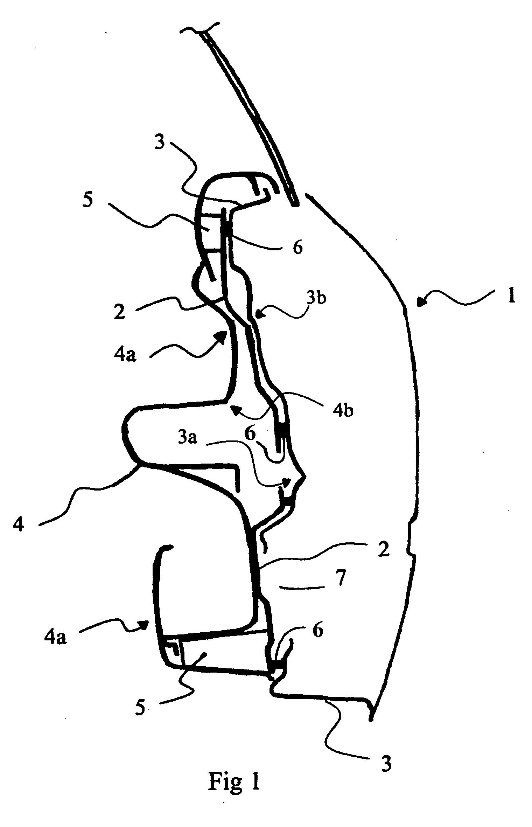

L'invention va être décrite ci-après dans un mode de réalisation préféré, non limitatif, en référence aux figures 1 à 3.

Un véhicule se compose traditionnelement de plusieurs éléments de carrosserie, lesquels sont assemblés en ligne de montage. Parmi les éléments de carrosserie constituant un véhicule, on trouve au moins une porte 1 composée notamment d'un support 3 et d'un moyen 4 d'habillage.

Le support 3 est un élément de structure métallique, traditionnellement nommé doublure de porte, comportant une face intérieure 3a et une face extérieure 3b. La face extérieure 3b de la doublure 3 de porte est destiné à supporter des éléments fonctionnels (non représentés), tel un mécanisme de lève-vitre ou une serrure de porte par exemple.

Le moyen 4 d'habillage se compose d'une garniture intérieure qui comprend une face 4a intérieure visible de l'intérieur de l'habitacle du véhicule et une face extérieure 4b conformée de sorte à coopérer avec le support 3 de porte. Le moyen 4 d'habillage est fixé sur la face intérieure 3a de la doublure 3 par un moyen de fixation connu, de type agrafe ou vis de ixation (non représenté).

Dans un soucis de réparabilité des éléments fonctionnels contenus dans la porte, il est connu que le support 3 dispose d'au moins un accès délimité par une ouverture 7. Afin de rendre étanche l'ouverture 7 ménagée sur le support 3, il est connu d'utiliser un élément 2, 6 d'étanchéité. Il s'agit traditionnellement d'une feuille 2 d'étanchéité solidarisée au support 3 via un cordon 6 d'étanchéité.

Le cordon 6 d'étanchéité est disposé sur le support 3, sensiblement en périphérie de l'ouverture 7, et comprend deux faces, l'une en contact sur la feuille 2 d'étanchéité, l'autre en contact sur le support 3. Afin de ne pas altérer la qualité du cordon 6 d'étanchéité lors d'un éventuel démontage de la feuille 2 d'étanchéité, une des faces du cordon 6 peut comprendre un pouvoir adhésif supérieur à celui de l'autre face. Par exemple, la face du cordon 6 en contact avec le support 3 possède un pouvoir adhésif inférieur à celui de la face en contact avec la feuille 2 d'étanchéité.

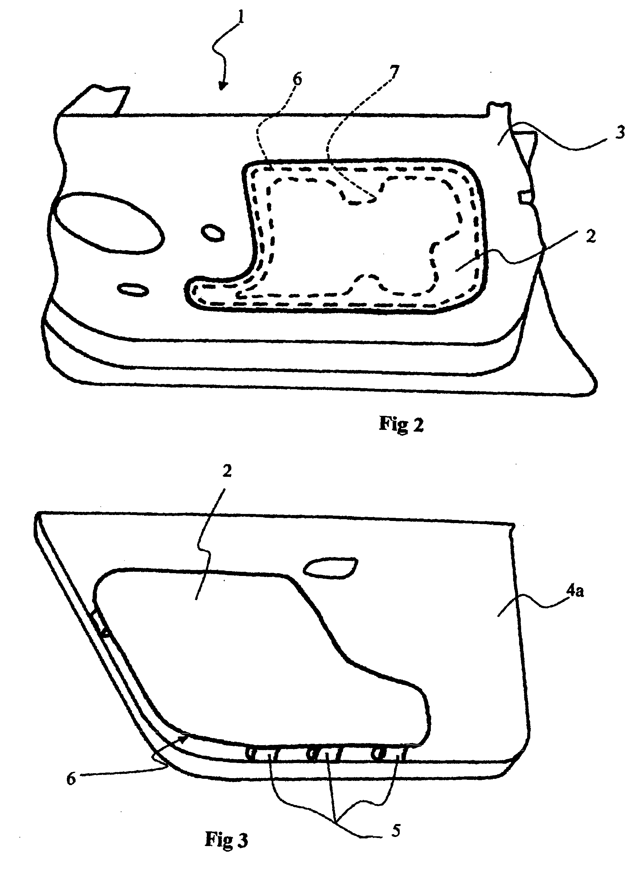

Traditionnellement, l'assemblage d'une porte 1 comprend une opération de fixation de l'élément 2, 6 d'étanchéité sur le support 3. Cette opération est réalisée manuellement ou automatiquement au moyen d'un manipulateur (non représenté), en ligne de montage. Ainsi, l'opération de fixation de l'élément 2, 6 d'étanchéité consiste à positionner le cordon 6 en périphérie de l'ouverture 7 pratiquée sur le support 3 de porte 1, de sorte que le cordon 6 est collé sur le support 3 de la porte 1 du véhicule (Cf. fig. 2). Ensuite, la feuille 2 d'étanchéité est posée sur le cordon 6 d'étanchéité alors collé sur la face 3a intérieure de la doublure 3 de porte.

L'opérateur ou la machine positionne ensuite un moyen 5 formant entretoise sur le moyen 4 d'habillage. Le moyen 5 formant entretoise est conformé de sorte à coopérer avec la face extérieure 4b du moyen 4 d'habillage. Plus précisemment, le moyen 5 formant entretoise et est disposé contre la face extérieure 4b du moyen 4 d'habillage. Le positionnement du moyen 5 formant entretoise sur le moyen 4 d'habillage permet avantageusement un pré-maintien du moyen 5 sur le moyen 4 d'habillage, facilitant ainsi la manipulation de l'ensemble ainsi constitué.

L'assemblage de la porte 1 comprend ensuite une étape de positionnement du moyen 4 d'habillage sur le support 3 de porte de sorte qu'il y a appui du moyen 5 formant entretoise sur l'élément 2, 6 d'étanchéité avant même que la face extérieure 4b du moyen 4 d'habillage soit en appui sur la face intérieure 3a du support 3.

Ensuite, le procédé selon l'invention comprend une opération de mise en pression d'une partie de l'élément 2, 6 d'étanchéité contre le support 3. La mise en pression est réalisée par le positionnement du moyen 4 d'habillage sur le support 3, de sorte que le moyen 5 formant entretoise est contraint sur tout ou partie de l'élément 2, 6 d'étanchiété. Le degré de pression est alors avantageusement obtenu par un choix de la forme et des propriétés de déformation du moyen 5 formant entretoise.

Le moyen 4 d'habillage est ensuite fixé sur le support 3 de sorte qu'il y a mise en pression permanente d'une partie de l'élément 2, 6 d'étanchéité sur le support 3. Cette étape de fixation du moyen 4 d'habillage sur le support 3 utilise un moyen de fixation connu (non représenté), du type agrafe ou vis de fixation. Ainsi, ce moyen de fixation coopère avec le moyen 4 d'habillage afin de contraindre le moyen 5 formant entretoise sur l'élément 2, 6 d'étanchéité. Il y a alors mise en pression permanente de tout ou partie de l'élément 2, 6 d'étanchéité sur le support 3 de porte 1. Ainsi, la mise en pression de l'élément 2, 6 d'étanchéité reste effective tant que le moyen 4 d'habillage est fixé sur la support 3.

Ainsi assemblée, la porte est constituée du support 3, du moyen 4 d'habillage, de l'élément 2, 6 d'étanchéité et du moyen 5 formant entretoise. L'élément 2, 6 d'étanchéité est disposé entre le support 3 et le moyen 4 d'habillage, tandis que le moyen 5 formant entretoise est disposé entre l'élément 2, 6 d'étanchéité et le moyen 4 d'habillage.

Selon un mode de réalisation préféré, le moyen 5 formant entretoise (Cf. fig. 1 et 3) se compose d'au moins un bloc de mousse déformable de section déterminée. Il est conformé de sorte à coopérer d'un côté avec la face extérieure 4b du moyen 4 d'habillage, de l'autre avec la face intérieure 3a du support 3. Les propriétés mécaniques de la mousse déformable donnent avantageusement à l'entretoise 5 la capacité d'exercer un effort de compression sur au moins une partie de l'élément 2, 6 d'étanchéité.

En particulier, la mousse déformable a de préférence une dureté comprise entre 15 et 60 shore et une forme permettant d'exercer une compression quasi homogène, quelle que soit la partie de l'élément 2, 6 d'étanchéité à comprimer.

De préférence, le moyen 5 formant entretoise est positionné au moins sur le niveau supérieur et/ou le niveau inférieur du moyen 4 d'habillage, tel que représenté en figure 1.

Selon un autre mode de réalisation, le moyen 5 formant entretoise est précontraint sur l'élément 2, 6 d'étanchéité par un cadre rigide (non représenté) fixé sur le support 3. Le cadre rigide est alors conformé de sorte à coopérer d'un côté avec la face extérieure 4b du moyen 4 d'habillage. L'autre face du cadre rigide est conformée de manière à coopérer avec la mousse déformable. Le cadre permet de s'affranchir des dispersions de montage et est réalisé de préférence en polypropylène afin d'homogénéiser précisemment l'effort de compression de la mousse déformable sur l'élément 2, 6 d'étanchéité.

Le moyen 5 formant entretoise permet de combler des zones d'espacement habituellement libres et présentes entre le support 3 et le moyen 4 d'habillage intérieur. Le moyen 5 formant entretoise permet avantageusement une réduction des bruits, réalisant un filtrage des bruits de vibration et/ou de fonctionnement du véhicule, perceptibles par les occupants présents dans l'habitacle du véhicule.

Le moyen 5 formant entretoise permet de plus l'absorption des chocs subis par la porte, suppléant des moyens de sécurité passive déjà existants et présents dans la porte 1 d'un véhicule automobile. Le moyen 5 positionné entre les occupants et l'extérieur du véhicule permet, en cas de choc, de protéger les occupants. En effet, les propriétés de déformation du moyen 5 permettent de dissiper par absorption une partie de l'énergie provenant d'un choc.

Selon l'invention, la mise en pression permanente de l'élément 2, 6 d'étanchéité contre la doublure de porte assure une étanchéité de qualité. La meilleure tenue de la porte permet d'obtenir une absence de détérioration de l'étanchéité malgré les fermetures répétées. En effet, la demanderesse a constaté que les chocs engendrés par les fermetures à répétition n'altèrent pas la qualité de l'étanchéité obtenue selon l'invention.

Enfin, l'invention a été décrite d'après un mode de réalisation préféré, l'invention n'est pas limitée à l'exemple de réalisation ci-dessus. Ainsi, le moyen 5 formant entretoise peut comprendre un élément déformable de type mousse et/ou un cadre (non représenté) rigide et solidaire de l'élément 2, 6 d'étanchéité.

Dans un autre mode de réalisation, le moyen 5 formant entretoise se compose d'au moins un bloc de mousse déformable conformé de sorte à produire un degré de compression différent sur tout ou partie de l'élément 2, 6 d'étanchéité à comprimer.

De même, il est envisageable d'assembler une porte dans laquelle la feuille 2 et le cordon 6 forment une pièce monobloc réalisée avant l'opération d'assemblage de la porte. Par conséquent, l'opération de fixation de l'élément 2, 6 d'étanchéité comprend une seule étape, au lieu de deux comme décrit précédemment. Il y a ainsi un gain de temps non négligeable pour l'assemblage de la porte, l'élément 2, 6 d'étanchéité étant réalisé en temps masqué.

Avantageusement, la demanderesse a constaté que les opérations de réparabilité d'au moins un organe fonctionnel contenu dans la porte, sont réalisés à moindre coût. En effet, grâce à l'invention, on peut donner à l'élément 2, 6 d'étanchéité un pouvoir adhésif inférieur du côté destiné à être fixé sur la doublure de porte de sorte qu'il est envisageable de retirer l'élément 2, 6 d'étanchéité sans le détériorer. Il n'est donc plus systématiquement nécessaire de changer l'élément 2, 6 d'étanchéité à chaque opération de réparabilité.

## Revendications

1. Procédé d'assemblage d'un élément de carrosserie de véhicule, telle qu'une porte (1), comportant une étape de fixation d'un élément (2,6) d'étanchéité sur un support (3) de l'élément (1) de carrosserie, une étape de mise en pression de l'élément (2,6) d'étanchéité contre le support (3) et une étape de fixation d'un moyen (4) d'habillage sur le support (3) de façon que l'élément (2,6) d'étanchéité assure l'étanchéité entre le moyen (4) d'habillage et le support (3), **caractérisé en ce que** l'étape de mise en pression consiste à utiliser un moyen (5) formant entretoise disposé entre le moyen (4) d'habillage et le support (3), le moyen (5) formant entretoise étant disposé de façon à exercer une pression sur au moins une partie de l'élément (2,6) d'étanchéité.

2. Procédé d'assemblage selon la revendication 1, **caractérisé en ce qu'**il comprend une étape visant à positionner et à fixer le moyen (5) formant entretoise sur l'élément (2,6) d'étanchéité, préalablement à l'étape de fixation de l'élément (2,6) d'étanchéité sur le support (3).

3. Procédé d'assemblage selon la revendication 1, **caractérisé en ce qu'**il comprend une étape de positionnement et de fixation du moyen (5) formant entretoise sur le moyen (4) d'habillage de porte (1) préalablement à l'étape de fixation du moyen (4) d'habillage sur le support (3).

4. Elément (1) de carrosserie de véhicule automobile, tel qu'une porte, comportant un support (3), un élément (2,6) d'étanchéité et un moyen (4) d'habillage fixé sur le support (3), **caractérisé en ce qu'**il comporte un moyen de mise en pression de l'élément (2,6) d'étanchéité constitué d'au moins une entretoise disposée entre le moyen (4) d'habillage et l'élément (2,6) d'étanchéité de façon à assurer une compression totale ou partielle d'au moins une partie de l'élément (2,6) d'étanchéité.

5. Elément (1) de carrosserie selon la revendication 4, **caractérisé en ce que** l'élément (2,6) d'étanchéité est constitué d'au moins une feuille (2) d'étanchéité coopérant avec au moins un cordon (6) d'étanchéité.

6. Elément (1) de carroserie selon la revendication 4 ou 5, **caractérisé en ce que** le moyen (4) d'habillage est constitué d'une garniture intérieure de porte.

7. Elément (1) de carroserie selon l'une quelconque des revendications 4 à 6, **caractérisé en ce qu'**il comporte au moins un moyen de fixation du moyen (4) d'habillage sur le support (3), du type agrafe ou vis de fixation, conformé de façon à contraindre l'entretoise sur l'élément (2,6) d'étanchéité.

8. Elément (1) de carroserie selon l'une quelconque des revendications 4 à 7, **caractérisé en ce que** le moyen (5) formant entretoise comprend un élément déformable de type mousse possédant un taux de compression déterminé.

9. Elément (1) de carroserie selon l'une quelconque des revendications 4 à 8, **caractérisé en ce que** le moyen (5) formant entretoise comprend un cadre rigide conformé de façon à coopérer avec le moyen (4) d'habillage et l'élément (2,6) d'étanchéité.

10. Elément (1) de carroserie selon l'une quelconque des revendications 4 à 9, **caractérisé en ce que** le moyen (5) formant entretoise est solidaire du moyen (4) d'habillage de porte (1).

11. Elément (1) de carroserie selon l'une quelconque des revendications 4 à 9, **caractérisé en ce que** le moyen (5) formant entretoise est solidaire de l'élément (2) d'étanchéité.

12. Elément (1) selon la revendication 5, **caractérisé en ce que** le cordon (6) d'étanchéité s'étend suivant une boucle fermée définie autour d'une ouverture (7) du support (3).

13. Elément (1) selon la revendication 5, **caractérisé en ce que** l'entretoise (5) exerce une compression sur au moins une partie du cordon (6) d'étanchéité.
